# EUROPÄISCHE PATENTANMELDUNG

(11) **EP 2 793 360 A1**
(43) Veröffentlichungstag der Anmeldung: **22.10.2014**
(21) Anmeldenummer: 13164082.3
(22) Anmeldetag: 17.04.2013
(51) Int. Cl.: H02K 1/18, H02K 1/20

(54) **Rotierende elektrische Maschine**

(71) Anmelder: Siemens Aktiengesellschaft, 80333 München (DE)
(72) Erfinder: Dorr, Gerhard, 90584 Allersberg (DE)

(57) **Zusammenfassung**

Die Erfindung betrifft einen Ständer (10) für eine rotierende elektrische Maschine (34), mit einem Blechpaket (12), wobei das Blechpaket (12) über seine, vorzugsweise gesamte, axiale Erstreckung zumindest teilumfänglich radial nach außen ragende, sich axial erstreckende Kühlrippen (40) aufweist, die einstückig mit dem Blechpaket (12) ausgebildet sind, zu welchem Zweck jeweils einer von zwei Druckringen (18) mit jeweils einem der gegenüberliegenden stirnseitigen Enden (14) des Blechpakets (12) verbunden ist, wobei an jedem der Druckringe (18) jeweils eine von zwei Drehmomentstützen (16) befestigt ist, sodass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig ableitbar sind.

## Beschreibung

Die vorliegende Erfindung betrifft einen Ständer für eine rotierende elektrische Maschine sowie eine rotierende elektrische Maschine mit einem ein Blechpaket aufweisenden Ständer und einem in einer Öffnung des Ständers drehbar gelagert angeordneten Läufer.

Gattungsgemäße elektrische Maschinen sowie Ständer hierfür sind dem Grunde nach im Stand der Technik bekannt, sodass es eines gesonderten druckschriftlichen Nachweises nicht bedarf. Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei der Drehbewegung handelt es sich um eine Drehbewegung des Läufers gegenüber dem Ständer.

Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Drehfeldmaschinen, die an ein mehrphasiges, insbesondere dreiphasiges elektrisches Netz angeschlossen sind, wie beispielsweise Asynchronmaschinen, Synchronmaschinen, Synchronmaschinen mit Dämpferkäfig, oder dergleichen oder auch Gleichstrommaschinen wie Nebenschluss- oder Reihenschlussmaschinen oder dergleichen.

Rotierende elektrische Maschinen weisen in der Regel ein Gehäuse auf. Bei großen rotierenden elektrischen Maschinen wird häufig ein Blechpaket des Ständers in das Gehäuse geschrumpft. Über den Schrumpfsitz kann mittels des Gehäuses das erzeugte Drehmoment in eine Tragstruktur, ein Fundament oder dergleichen eingeleitet und die Maschine abgestützt werden. Häufig sind die Gehäuse der rotierenden elektrischen Maschinen durch Stahlkonstruktionen gebildet, die aus einzelnen Teilen zusammengeschweißt sind. Aufgrund des Dehnungsverhaltens von Stahl ist der Schrumpfsitz vergleichsweise unproblematisch, weshalb sich diese Art von Gehäuse im praktischen Gebrauch bewährt hat.

Es hat sich jedoch gezeigt, dass die Kühlung, insbesondere des Ständers bei einer vorbeschriebenen Anordnung nachteilig ist. Einerseits bildet der Übergang vom Blechpaket zum Gehäuse einen Wärmewiderstand aus, der eine thermische Ankopplung des Blechpaktes an eine Kühlung verschlechtert. Andrerseits erweist es sich als nachteilig für die Kühlung, dass bei axialer Luftströmung das letzte Drittel des Gehäuses nur sehr unzureichend gekühlt wird, weil sich dort die Kühlströmung vom Gehäuse löst. Der entsprechende Maschinenteil wird nur unzureichend gekühlt. Gerade bei großen rotierenden elektrischen Maschinen, zum Beispiel Maschinen mit großer Leistung, Hochspannungsmaschinen oder dergleichen, erweist sich dies als ungünstig.

Die Erfindung hat es sich zur Aufgabe gemacht, eine verbesserte Kühlung für rotierende elektrische Maschinen bereitzustellen.

Als Lösung wird mit der Erfindung ein Ständer für eine rotierende elektrische Maschine, mit einem Blechpaket vorgeschlagen, wobei das Blechpaket über seine, vorzugsweise gesamte, axiale Erstreckung zumindest teilumfänglich radial nach außen ragende, sich axial erstreckende Kühlrippen aufweist, die einstückig mit dem Blechpaket ausgebildet sind, zu welchem Zweck jeweils einer von zwei Druckringen mit jeweils einem der gegenüberliegenden stirnseitigen Enden des Blechpakets verbunden ist, wobei an jedem der Druckringe jeweils eine von zwei Drehmomentstützen befestigt ist, sodass das Blechpaket mit den Druckringen mittels der Drehmomentstützen direkt gestützt ist und auf den Ständer einwirkende Kräfte und Momente über die Drehmomentstützen vollständig ableitbar sind.

Durch die vorteilhafte Aufhängung des Blechpakets des Ständers mittels der beiden Druckringe und der beiden Drehmomentstützen kann das Blechpaket gehäusefrei gehalten werden, wodurch das Blechpaket an seiner radial äußeren Oberfläche hinsichtlich der Kühlung optimiert werden kann, und zwar indem der dort geschaffene freie Bereich mit Kühlrippen versehen wird. Vorzugsweise sind die Kühlrippen einstückig mit dem Blechpaket ausgebildet. Beispielsweise sind die einzelnen Bleche des Blechpakets bereits derart gestaltet, dass im zum Blechpaket zusammengestellten Zustand die Kühlrippen gebildet sind. Die einzelnen Bleche können hierfür mit geeigneten Vorsprüngen oder Ausstülpungen versehen sein, die bereits bei der Herstellung der Bleche mitgefertigt werden. Sie können beispielweise durch Stanzen oder dergleichen hergestellt werden. Besonders vorteilhaft können sie mit der Formgebung der Bleche im gleichen Verfahrensschritt hergestellt werden.

Darüber hinaus kann der hohe Aufwand für das Gehäuse eingespart werden. Dies kommt ferner dem Bestreben entgegen, Aufwand, insbesondere Kosten, für das Gehäuse reduzieren zu können, indem die aufwändigen Gehäusekonstruktionen durch Gusskonstruktionen ersetzt werden. Aus Kostengründen wird dabei Grauguss bevorzugt.

In Bezug auf die rotierende elektrische Maschine erweist sich bei Grauguss das Dehnungsverhalten aufgrund von Temperatureinwirkung von Grauguss als ungünstig. Grundsätzlich ist Grauguss nur bedingt geeignet, Zugspannungen, die infolge von Schrumpfsitzen in der Struktur entstehen, zu übertragen. Deshalb ist es bei Anwendung von Grauguss erforderlich, die Gehäusekonstruktionen aufwändig zu versteifen, wodurch ein großer Teil einer möglichen Einsparung verloren geht. Weitere Hindernisse entstehen bei der Verwendung von Grauguss durch Einschränkungen bezüglich der Kühlung der rotierenden elektrischen Maschine, insbesondere hinsichtlich der Belüftungsquerschnitte.

Durch die Erfindung kann auch hier eine Verbesserung erreicht werden, wodurch der Aufwand für Gehäuse reduziert und zugleich die aus der Verwendung von Grauguss bekannten Nachteile weitgehend zu vermieden werden können.

Gegenüber den bekannten Gehäusekonstruktionen des Stands der Technik kommt die erfindungsgemäße Ausgestaltung mit wesentlich weniger, insbesondere weniger komplexen Bauteilen aus. Die Drehmomentstütze kann an beiden Stirnseiten des Blechpakets angeordnet und gleich ausgeführt sein. Die Stirnseiten des Blechpakets beziehungsweise dessen stirnseitigen Enden sind insbesondere Begrenzungen in axialer Erstreckung des Blechpakets. Axial bezeichnet die Richtung einer Drehachse des im Ständer drehbar angeordneten Läufers. Darüber hinaus kann die Drehmomentstütze kostengünstig aus Grauguss gebildet sein, weil Grauguss im Unterschied zu Zugspannungen Druckspannungen gut übertragen kann.

Die Erfindung nutzt somit die Eigensteifigkeit des Blechpaketes aus und kann deshalb auf ein geschlossenes Gehäuse komplett verzichten, wodurch Freiraum für die Kühlrippen geschaffen wird. Bedarfsweise kann ergänzend eine dünnwandige Schutzabdeckung vorgesehen sein, die als einfache Blechkonstruktion kostengünstig herstellbar ist. Dadurch ergibt sich zudem eine Gewichtseinsparung, weil ein Gehäuse, beispielsweise in Form einer kostengünstigen Blechkonstruktion, keine großen Kräfte mehr zu übertragen braucht. Dies erfolgt bei der Erfindung über die mit den Druckringen verbundenen Drehmomentstützen.

Vollständig ableitbar bedeutet, dass sowohl das Gewicht des Ständers als auch im bestimmungsgemäßen Betrieb einwirkende Momente, insbesondere Drehmomente im Wesentlichen ausschließlich über die Drehmomentstützen abgeleitet werden. Weitere separate Einrichtungen zur Kraft- und/oder Drehmomentübertragung, wie zum Beispiel kraftübertragende Gehäuse, Halterungen und/oder dergleichen, können eingespart werden. Insbesondere erlaubt es die Erfindung, tragende Gehäusevorrichtungen sowie hiermit verbundene aufwändige Verbindungsverfahren wie Schrumpfpressen oder dergleichen zu vermeiden. Das Gewicht des Ständers sowie einwirkende Momente werden vorzugsweise ausschließlich mittels der Drehmomentstütze abgeleitet. Die Drehmomentstützen stützen das Blechpaket mit den Druckringen somit direkt.

Im Unterschied zum Stand der Technik ist bei der Erfindung der Ständer über das Blechpaket lediglich an seinen stirnseitigen Enden abgestützt. Anstelle des sonst üblichen, mit dem Blechpaket verbundenen Gehäuses ist bei der Erfindung die Anordnung von Drehmomentstützen vorgesehen, die mit Druckringen verbunden sind. Dazwischen ist keine weitere Abstützung mehr erforderlich, wodurch insbesondere Kontakt mit weiteren Außenteilen weitgehend vermieden werden kann. Dies führt zu einem weiteren Vorteil in Bezug auf Schallemission, weil der Ständer in dem Bereich zwischen den Stirnseiten in der Regel stark schwingt und diese Schwingungen bei Kontakt mit Außenteilen Schall erzeugen können. Die Erfindung erlaubt neben der Anordnung von Kühlrippen zugleich, eine Reduktion der Schallimmission zu erreichen.

Der Ständer weist das Blechpaket auf, das seinerseits aus einzelnen, untereinander elektrisch isolierten ferromagnetischen Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN10106, EN10107 oder dergleichen. In das Blechpaket eingelassen sind stromführende Wicklungen, die einen magnetischen Fluss bereitstellen. Die Wicklung des Ständers ist somit häufig in das Blechpaket integriert ausgeführt. Der Ständer nimmt die Reaktio in Bezug auf ein Läuferdrehmoment auf und stützt sich gegen eine Auflage ab, um drehfest angeordnet zu sein. Die Abstützung kann durch ein Fundament oder dergleichen Auflage gebildet sein. Das Blechpaket bezeichnet also einen aus ferromagnetischen Werkstoffen hergestellten und damit magnetisierbaren, schichtweise aufgebauten Körper. Die Aufgabe des Blechpakets besteht darin, in Verbindung mit den stromdurchflossenen Wicklungen den magnetischen Fluss zu bündeln.

An den stirnseitigen Enden des Blechpakets sind jeweils die beiden Drehmomentstützen befestigt. Mittels der Drehmomentstützen ist das Blechpaket festlegbar, das heißt, sowohl das Drehmoment in Form der Reaktio als auch das Gewicht des Ständers, insbesondere gegebenenfalls mit dem darin angeordneten Läufer, können über die Drehmomentstütze abgeleitet werden. Dadurch ist das Blechpaket und infolgedessen der Ständer drehfest angeordnet im Unterschied zum Läufer.

Die Befestigung der Drehmomentstützen stirnseitig an den Enden des Blechpakets erfolgt über Druckringe, wobei jeweils einer an einem der stirnseitigen Enden des Blechpakets angeordnet ist. Über die Druckringe wird eine zuverlässige, vorzugsweise lösbare, Ankopplung der Drehmomentstützen an das Blechpaket erreicht. Dies ist vorteilhaft, wenn die rotierende elektrische Maschine, insbesondere der Ständer, zu Wartungszwecken, Reparatur oder dergleichen demontiert werden muss.

Die Druckringe selbst sind mit dem Blechpaket vorzugsweise stoffschlüssig verbunden, das heißt, zwischen dem Druckring und dem Blechpaket besteht eine im Wesentlichen nicht lösbare Verbindung. Diese kann zum Beispiel in Form von Löten, Verkleben und/oder dergleichen vorgesehen sein. Alternativ oder ergänzend kann aber auch eine lösbare Verbindung beispielsweise mittels Verschraubungen oder dergleichen vorgesehen sein. Der Druckring erlaubt es, eine zuverlässige mechanische Ankopplung des Blechpakets an die Drehmomentstütze während des bestimmungsgemäßen Betriebs des Ständers in der rotierenden elektrischen Maschine zu gewährleisten. Beispielsweise kann Einsatz des Druckrings unterschiedliches Ausdehnungsverhalten, Korrosion auslösende elektrochemische Vorgänge und/oder dergleichen anpassen beziehungsweise vermeiden helfen.

Besonders vorteilhaft ist die stoffschlüssige Verbindung mittels Schweißen gebildet. Dadurch kann eine besonders zuverlässige und hoch belastbare Verbindung erreicht werden.

Die Drehmomentstütze selbst kann aus Metall, insbesondere kostengünstig aus Grauguss hergestellt sein. Zwischen den Drehmomentstützen ist das Blechpaket von außen frei zugänglich, sofern nicht weitere Einrichtungen in diesem Bereich für den vorgesehenen bestimmungsgemäßen Betrieb der rotierenden elektrischen Maschine, wie beispielsweise Kühlkanäle oder dergleichen, dort angeordnet sind. Die weitgehend freie Zugänglichkeit des Blechpakets von außen erlaubt es, eine kostengünstige effiziente Kühlung vorzusehen. Dadurch kann die Leistungsfähigkeit der rotierenden elektrischen Maschine erhöht werden. Vorteilhaft ist diese Anordnung an beiden stirnseitigen Enden des Ständerblechpakets identisch ausgeführt.

Mittels des Druckrings kann erreicht werden, dass ein Drehmoment vom Ständer mittels Flächenpressung zwischen dem Druckring und der Drehmomentstütze auf diese übertragen werden kann. Die Flächenpressung kann beispielsweise dadurch erzeugt werden, dass der Druckring mit der Drehmomentstütze axial verschraubt ist. Dabei ist die Anzahl der Schrauben vorzugsweise derart gewählt, dass die Flächenpressung ausreicht, um im ungünstigsten Lastfall zum Beispiel das Kurzschlussmoment des Motors übertragen zu können. Vorteilhaft ist diese Anordnung an beiden stirnseitigen Enden des Blechpakets des Ständers identisch ausgeführt.

Gemäß einer Weiterbildung wird vorgeschlagen, dass das Blechpaket mittels der Druckplatten druckbeaufschlagt ist, zu welchem Zweck die Druckplatten mittels Zugstangen gegeneinander vorgespannt sind. Dadurch kann das Blechpaket mit einer Eigensteifigkeit versehen werden, sodass das Gehäuse eingespart werden kann. Darüber hinaus kann das Blechpaket auch mittels Verschweißen, Kleben oder dergleichen zu einem festen Verbund geformt sein. Die Druckplatten können einstückig mit den Druckringen ausgebildet sein.

Eine weitere Ausgestaltung schlägt vor, dass zwischen den Kühlrippen wenigstens ein von einem Kühlfluid durchströmbares Kühlrohr angeordnet ist. Dadurch kann die Kühlwirkung weiter verbessert werden. Das Kühlrohr kann aus einem geeigneten Werkstoff wie Metall wie Stahl, Kupfer, Aluminium, Legierungen hiervon und /oder dergleichen, Kunststoff, einem Verbundwerkstoff und/oder dergleichen gebildet sein. Das Kühlfluid ist vorzugsweise eine Kühlflüssigkeit wie Wasser, insbesondere versetzt mit Glykol oder dergleichen. Das Kühlfluid kann alternativ aber auch durch ein Gas gebildet sein. Insbesondere kann durch den Einsatz von wenigstens einem Kühlrohr auch eine Kombination einer Gaskühlung, die direkt mit den Kühlrippen wechselwirkt, mit einer in dem wenigstens einen Kühlrohr geführten Flüssigkeitskühlung erreicht werden. Die Kombination kann ergänzend genutzt werden, um einen axialen Temperaturgradienten des Ständers zu reduzieren. Vorzugsweise ist das Kühlrohr zwischen wenigstens zwei zum Beispiel benachbarte Kühlrippen eingepresst. Darüber hinaus kann eine Verbindung zwischen dem Kühlrohr und den Kühlrippen durch Kleben und/oder stoffschlüssiges Verbinden wie Löten, Schweißen, oder dergleichen vorgesehen sein.

Eine weitere Ausgestaltung sieht vor, dass die Drehmomentstütze eine Stütztraverse aufweist. Die Stütztraverse ist vorzugsweise einstückig mit der Drehmomentstütze verbunden und kann beispielsweise durch einen radial nach außen ragenden Vorsprung gebildet sein. Die Stütztraverse kann aber auch als separates Bauteil ausgebildet sein, das mit der Drehmomentstütze verbunden ist, beispielsweise mittels Verschraubung, Vernietung, Verschweißung, Verklebung und/oder dergleichen. Über die Stütztraverse kann die Drehmomentstütze zum Beispiel an einem Rahmen befestigt sein, der vorzugsweise mit einem Fundament oder einer vergleichbare Auflage verbunden ist. Vorteilhaft sind wenigstens drei vorzugsweise jedoch vier Stütztraversen vorgesehen, wobei die Stütztraversen an gegenüberliegenden Umfangspositionen der Drehmomentstützen angeordnet sind. Dadurch lässt sich eine zuverlässige, stabile Fixierung des Ständers, insbesondere des Blechpakets erreichen. In dieser Ausgestaltung legt die Drehmomentstütze die Position des Läufers gegenüber dem Ständer fest. Damit kann eine handhabbare Baueinheit geschaffen und insbesondere Justierungen der Läuferposition gegenüber dem Ständer abhängig von einem Aufstellort vermieden werden.

Gemäß einer weiteren Ausgestaltung der Erfindung ist vorgesehen, dass die Drehmomentstütze eine Lagervorrichtung für einen Läufer der rotierenden elektrischen Maschine aufweist. Die Lagervorrichtung kann zum Beispiel durch einen Lagerschild gebildet sein, der mit der Drehmomentstütze verbunden ist, insbesondere einstückig mit ihr ausgebildet ist. Der Lagerschild kann eine Lagereinheit aufweisen, die eine Welle des in der Öffnung des Ständers angeordneten Läufers drehbar lagert.

Gemäß einer weiteren Ausgestaltung wird vorgeschlagen, dass die Stütztraverse eine Dämpfungseinheit aufweist. Mittels der Dämpfungseinheit kann erreicht werden, dass rotierende elektrische Maschinen, die bislang nicht für einen Betrieb im überkritischen Bereich geeignet sind, überkritisch betrieben werden können. Daneben können aufbau- und/oder maschinenbedingte Resonanzen eingestellt und/oder gedämpft werden sowie eine Schallerzeugung reduziert werden. So können beispielsweise Kosten eingespart werden, indem teure Gleitlager durch kostengünstige Wälzlager bei der Lagerung des Läufers vorgesehen sein können. Weitere Vorteile ergeben sich dadurch, dass Kosten durch reduzierte Anforderungen an die Genauigkeit bei Fertigungsprozessen eingespart werden können, eine höhere Sicherheit erreicht werden kann und Sperrbereiche hinsichtlich Drehzahlen im bestimmungsgemäßen Betrieb, insbesondere bei Drehzahlregelungen, reduziert werden oder entfallen können.

Die Dämpfungseinheit kann als passives Dämpfungssystem oder auch als aktives Dämpfungssystem ausgestaltet sein. Ein passives Dämpfungssystem kann zu diesem Zweck elastisch und/oder plastisch verformbare Elemente aufweisen, beispielsweise Gummidämpfer, Federelemente und/oder dergleichen. Darüber hinaus können die verformbaren Elemente weitere mechanische Maßnahmen aufweisen wie zum Beispiel Nuten und oder dergleichen, mit denen ihre Eigenschaften eingestellt werden können. Insbesondere kann diesbezüglich eine Wendel-Nut-Technologie zum Einsatz kommen. Vorzugsweise ist das passive Dämpfungssystem derart ausgelegt, dass ein weitgehend ungestörtes Durchfahren von Resonanzstellen erreicht werden kann.

Besonders vorteilhaft kann die Dämpfungseinheit einen Aktuator aufweisen. Mittels des Aktuators kann eine aktive Dämpfung einer Resonanzstelle beziehungsweise Resonanzschwingung erreicht werden. Zu dem Zweck wird der Aktuator mittels eines Regelungssystem geeignet angesteuert. Der Aktuator kann beispielsweise ein den piezoelektrischen Effekt nutzender Aktuator, zum Beispiel in Stapelbauweise oder dergleichen sein.

Mit der Erfindung wird ferner eine rotierende elektrische Maschine der gattungsgemäßen Art vorgeschlagen, wobei der Ständer wie zuvor ausgeführt ausgebildet ist. Dadurch kann für die rotierende elektrische Maschine eine hochwirksame Kühlung erreicht werden. Darüber hinaus kann die Maschine einfacher und kostengünstiger ausgebildet sein. Weiterhin kann eine Schallreduktion erreicht werden.

Eine Ausgestaltung sieht vor, dass die rotierende elektrische Maschine ein vom Blechpaket des Ständers beabstandetes Gehäuse aufweist. Dadurch kann ein Schutz der elektrischen Maschine, insbesondere der Kühlrippen vor äußeren Einwirkungen erreicht werden. Zugleich erlaubt es die erfindungsgemäße Konstruktion, in Zusammenwirkung mit den Kühlrippen auf einfache Weise mit wenig komplexen Bauteilen Kühlkanäle auszubilden. Das Gehäuse braucht bei der Erfindung nämlich keine Drehmomente übertragen und auch keine thermische Ankopplung realisieren. Dadurch kann das Gehäuse kostengünstig aus Blech und mit gewünschten Strukturen hergestellt sein. Natürlich erlaubt es die Erfindung, auch Gehäuse aus Werkstoffen wie Kunststoff, Verbundwerkstoffen, beispielsweise faserverstärkten Kunststoffen oder dergleichen herzustellen.

Darüber hinaus kann mit der Erfindung das aufwändige Fügen von Ständer und Gehäuse weitgehend vermieden werden, weil eine Verbindung von Gehäuse und Ständer, insbesondere Blechpaket nicht mehr erforderlich ist. Infolgedessen ist auch eine Fertigung von Ständer beziehungsweise Ständerbauteilen wie dem Blechpaket und Gehäuse mit seinen Bauteilen nicht mehr an die für das Fügen erforderlichen engen Toleranzen gebunden. Das Gehäuse bildet demnach lediglich noch eine dünnwandige Schutzabdeckung, woraus sich ergänzend eine Gewichtseinsparung ergibt. Dadurch kann Aufwand, insbesondere können Kosten eingespart werden.

Ferner kann vorgesehen sein, dass das Gehäuse eine Fluidleitvorrichtung aufweist. Die Fluidleitvorrichtung dient dem Führen eines Kühlfluids im bestimmungsgemäßen Betrieb. Das Kühlfluid kann beispielsweise ein Gas wie Luft, Helium oder dergleichen oder auch eine Flüssigkeit wie Wasser, Alkohol oder dergleichen sein, auf der die Kühlwirkung basiert. Besonders vorteilhaft erweist sich eine Luftkühlvorrichtung, zu welchem Zweck das Gehäuse einen Ventilator aufweist, der über eine Einlassöffnung Kühlluft als Kühlfluid ansaugt und zur rotierenden elektrischen Maschine, beispielsweise dem Blechpaket, dem Läufer und/oder dergleichen führt. Über eine Austrittsöffnung des Gehäuses kann die erwärmte Kühlluft wieder abgeführt werden. Dies kann auch entsprechend des gewählten Kühlfluids angepasst sein.

In einer weiteren Ausgestaltung bildet die Fluidleitvorrichtung mit den Kühlrippen, vorzugsweise geschlossene, Fluidkanäle aus. Dadurch kann eine besonders wirksame Kühlung erreicht werden, die möglichst viel durchströmendes Fluid zur Kühlung nutzen kann.

Um die Schallunterdrückung weiter zu verbessern, kann vorgesehen sein, dass zwischen dem Blechpaket und dem Gehäuse ein schalldämmendes Material angeordnet ist. Dies kann beispielsweise als eigene Schicht mit dem Gehäuse verbunden sein. Das schalldämmende Material selbst kann durch einen porigen Werkstoff gebildet sein, beispielsweise einen Schaumstoff, insbesondere einen offenporigen Schaumstoff, einen Faserstoff, beispielsweise Mineralfaser, Steinwolle oder dergleichen, oder Kombinationen hiervon. Zwischen dem Blechpaket und dem Gehäuse beziehungsweise dem schalldämmenden Material kann ferner ein Luftspalt vorgesehen sein, der ein Durchströmen des Kühlfluids erlaubt.

Vorteilhaft umfasst die rotierende elektrische Maschine einen mit einer Stütztraverse einer Drehmomentstütze verbindbaren Grundrahmen. Der Grundrahmen kann an die Drehmomentstützen adaptiert ausgebildet sein, sodass eine zuverlässige und einfach herzustellende Verbindung mit einem Fundament, oder einer dergleichen Auflage realisiert werden kann. Besonders vorteilhaft kann die Drehmomenteinleitung in unmittelbarer Nähe eines Fußes am Grundrahmen erfolgen, wodurch sich ein sehr günstiger Kraftfluss ergibt. Dadurch kann ferner die Möglichkeit eröffnet werden, die Wandstärke des Grundrahmens im Bereich zwischen den Füßen zu minimieren. Daraus ergeben sich weitere Gewichts- und Kostenvorteile. Der Grundrahmen ist vorzugsweise Bestandteil der rotierenden elektrischen Maschine.

Eine weitere Ausgestaltung sieht vor, dass zwischen der Stütztraverse und dem Grundrahmen eine Dämpfungseinheit angeordnet ist. Die Dämpfungseinheit kann beispielsweise durch ein elastisches Bauelement gebildet sein, beispielsweise einem Gummipuffer, einem elastischen Kunststoffelement und/oder dergleichen. Dadurch lässt sich eine weitere Entkopplung der rotierenden elektrischen Maschine von der Auflage erreichen.

Gemäß einer Weiterbildung wird vorgeschlagen, dass die rotierende elektrische Maschine einen inneren, vorzugsweise hermetisch geschlossenen, Kühlkreislauf aufweist. Mittels des inneren Kühlkreislaufs kann eine gleichmäßigere Temperaturverteilung entlang der axialen Erstreckung der rotierenden elektrischen Maschine erreicht werden. Vorzugsweise basiert der innere Kühlkreislauf auf Luft als Kühlfluid und weist einen Lüfter sowie Kühlkanäle auf, die den Kühlkreislauf bilden.

Weitere Merkmale und Vorteile sind der folgenden Beschreibung eines Ausführungsbeispiels zu entnehmen. Die Beschreibung dient lediglich zur Erläuterung der Erfindung und soll diese nicht beschränken.

Es zeigen:
- FIG 1: einen Ausschnitt einer schematischen Frontansicht eines Ständers gemäß der Erfindung,
- FIG 2: eine schematische Schnittdarstellung entlang einer Linie II-II in FIG 1,
- FIG 3: eine schematische Schnittdarstellung entlang einer Linie III-III in FIG 1,
- FIG 4: eine schematisch perspektivische Explosionsdarstellung einer rotierenden elektrischen Maschine mit einem Ständer gemäß der Erfindung,
- FIG 5: die rotierende elektrische Maschine gemäß FIG 4 in einer schematisch axialen Schnittdarstellung,
- FIG 6: eine vergrößerte Darstellung eines Bereichs der axialen Schnittansicht gemäß FIG 5 im Bereich des Lufteintritts in einer in Umfangsrichtung um 45° gedrehten Darstellung, und
- FIG 7: eine schematisch perspektivische Gesamtansicht der rotierenden elektrischen Maschine gemäß FIG 4.

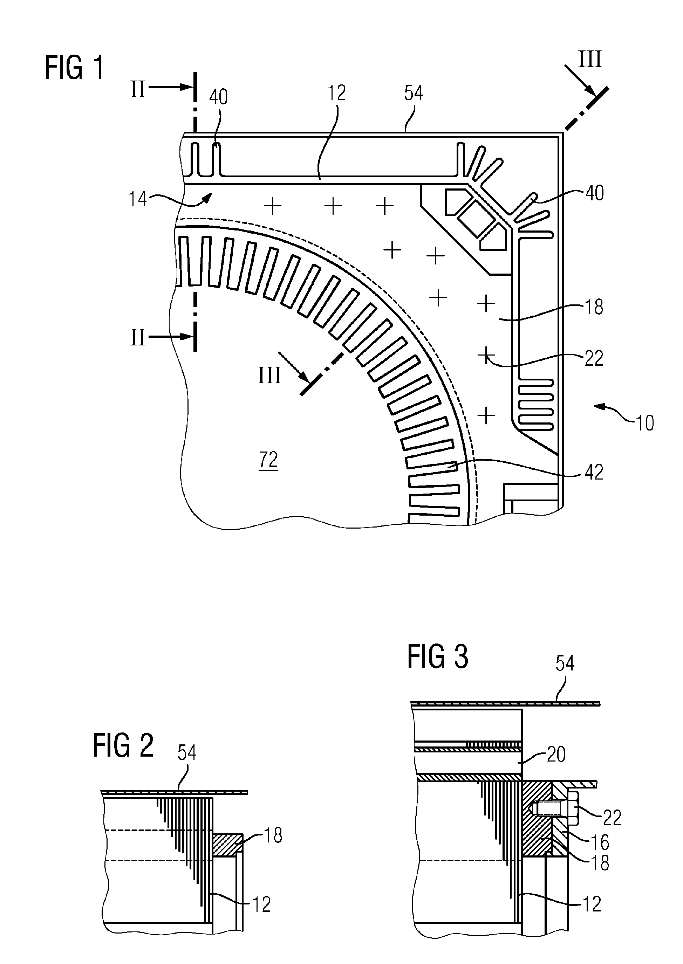

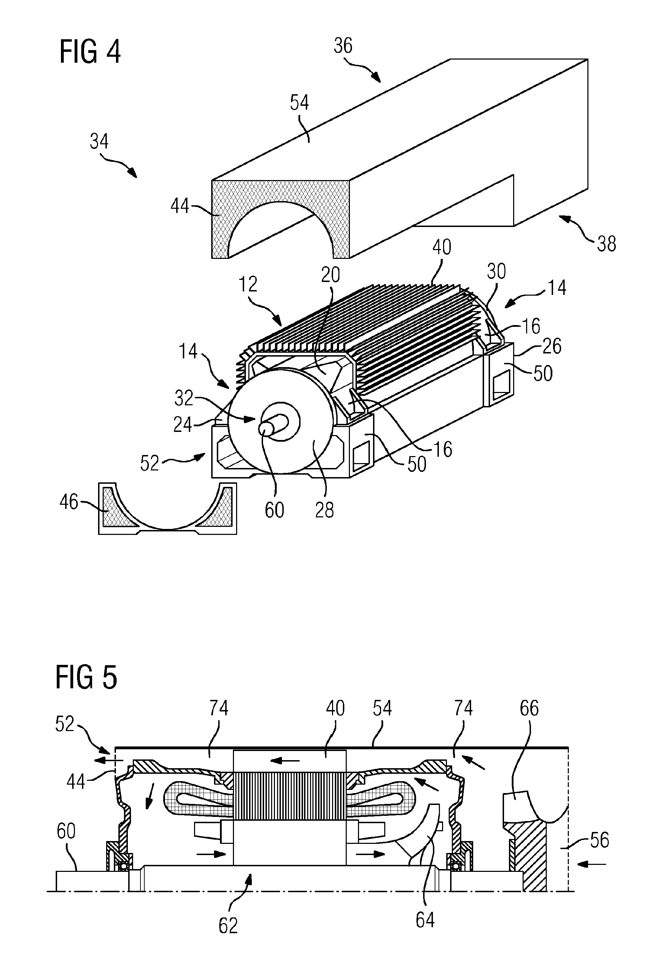

FIG 1 zeigt einen Ausschnitt einer Frontansicht eines Ständers 10 in schematischer Darstellung. Der Ständer 10 weist ein Blechpaket 12 auf, das eine Öffnung 72 für einen in dieser Figur nicht dargestellten Läufer 32 (FIG 4) bereitstellt. Die Öffnung 72 ist kreisrund ausgebildet. Im Bereich der öffnungsseitigen Oberfläche des Blechpaktes 12 sind umfänglich Ständernuten 42 angeordnet, in denen eine Wicklung des Ständers 10 angeordnet ist. Mittels der Wicklung kann ein ständerseitiger Fluss erzeugt werden, der mit einem läuferseitigen Fluss im bestimmungsgemäßen Betrieb verkettet ist.

In FIG 1 ist die Draufsicht auf ein stirnseitiges Ende 14 des Blechpakets 12 dargestellt, welches in der Draufsicht von einem Druckring 18 teilweise abgedeckt ist. Der Druckring 18 ist mit dem Blechpaket 12 verschweißt und stellt Verschraubungen 22 bereit, mittels denen eine Verbindung zu einer Drehmomentstütze 16 herstellbar ist (FIG 3).

Ferner ist aus FIG 1 ersichtlich, dass das Blechpaket 12 radial nach außen ragende Kühlrippen 40 aufweist, die einstückig mit dem Blechpaket 12 ausgebildet sind. Die Kühlrippen 40 sind vorliegend in einem Herstellungsprozess mit den einzelnen Blechen des Blechpakets 12 hergestellt.

FIG 2 zeigt einen Ausschnitt eines Schnitts entlang der Linie II-II in FIG 1. Zu erkennen ist der Druckring 18, der mit dem Ständerblechpaket 12 verschweißt ist.

FIG 3 zeigt einen Ausschnitt des Schnitts entlang der Linie III-III in FIG 1, ein um 45° versetzter Schnitt in Umfangsrichtung gegenüber FIG 2. Zu erkennen ist hier, dass die Drehmomentstütze 16 mit dem Druckring 18 über eine Verschraubung 22 verschraubt ist. Dies ermöglicht eine lösbare Befestigung des Ständerblechpakets 12 an der Drehmomentstütze 16, sodass zu Wartungszwecken oder dergleichen eine einfache Demontage bereitgestellt werden kann. Ferner ist in FIG 3 ein Rückströmkanal 20 sichtbar, zu dem später noch ausgeführt werden wird.

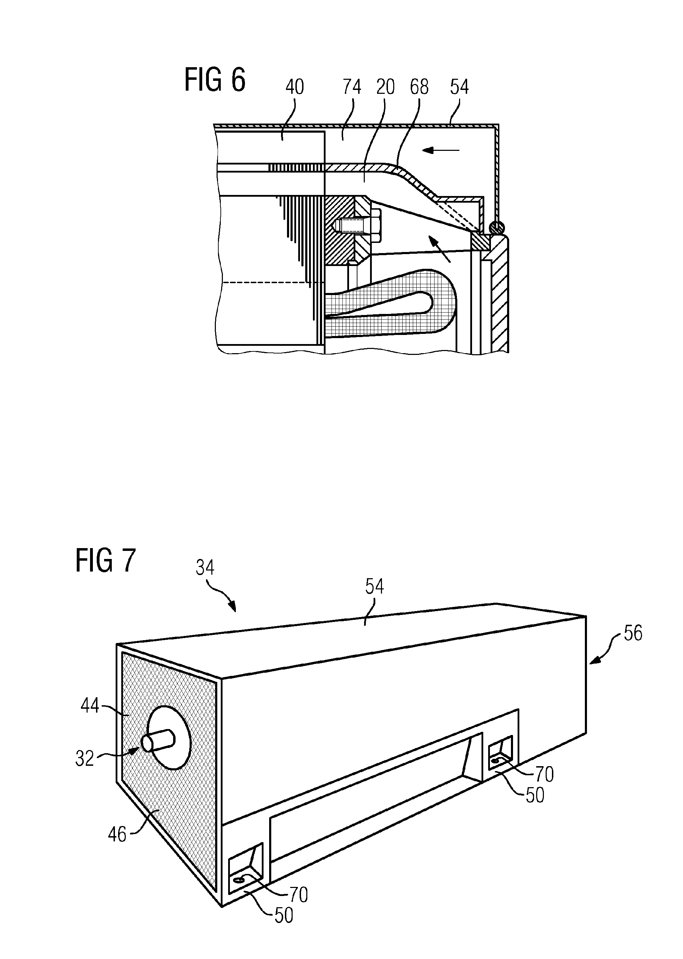

FIG 4 zeigt eine Gesamtansicht in perspektivischer Explosionsdarstellung einer elektrischen Maschine 34 mit dem Ständer 10 sowie einen in der Öffnung 72 angeordneten Läufer 32, von dem ein Ende einer Welle 60 nach vorne herausragt. Die rotierende elektrische Maschine 34 umfasst ferner einen Grundrahmen 26, der mittels Verschraubungen 70 im Bereich von Füßen 50 (FIG 7) mit einem nicht bezeichneten Fundament verbunden ist. Der Grundrahmen 26 weist zu diesem Zweck Füße 50 auf, in denen die Verschraubung 70 anordbar ist. Ferner stellen die Füße 50 eine Auflage bereit, auf der Stütztraversen 24 der Drehmomentstützen 16 aufliegen und mit dem Grundrahmen 26 verbunden sind. An den stirnseitigen Enden 14 des Blechpakets 12 des Ständers 10 sind Lagerschilde 28, 30 als Lagervorrichtung für den Läufer 32 vorgesehen. Durch die Lagerschilde 28, 30 ist der Läufer 32 innerhalb der Öffnung 72 drehbar gelagert angeordnet. Zu erkennen ist ferner der Rückströmkanal 20, der jeweils in den Ecken des rechteckigen Querschnitts des Blechpakets 12 angeordnet ist (FIG 3).

Das Blechpaket 12 weist über seinen Umfang die Kühlrippen 40 auf, die einstückig mit dem Blechpaket 12 ausgebildet sind. Im oberen Bereich der FIG 4 ist ein Gehäuse 36 dargestellt, welches eine Blechabdeckung 54 aufweist, und in einem hinteren Bereich eine Kühlvorrichtung 38 mit einer Luftleitvorrichtung bereitstellt.

FIG 5 zeigt in schematischer Schnittdarstellung einen axialen Schnitt durch die rotierende elektrische Maschine 34 gemäß FIG 4. Über eine Lufteintrittsöffnung 56 saugt ein äußerer Ventilator 66 Luft als Kühlfluid beziehungsweise Kühlmittel an und fördert dies durch einen Kanal 74, der sich durch den Bereich der Kühlrippen 40 des Blechpakets 12 erstreckt, bis zu einer frontseitigen Luftaustrittsöffnung 52, durch die die erwärmte Kühlluft austritt. Zu diesem Zweck weist die Blechabdeckung 54 frontseitig, das heißt, im Bereich des Endes einer Welle 60 des Läufers 32, ein Lochblech 44 auf, durch das die Kühlluft austreten kann. Entsprechend ist im unteren Bereich der rotierenden elektrischen Maschine 34 ein Lochblech 46 vorgesehen (FIG 4).

Um einen axialen Temperaturgradienten der rotierenden elektrischen Maschine 34 reduzieren zu können, weist die rotierende elektrische Maschine 34 ergänzend einen inneren Kühlkreislauf 62 auf, der mittels eines inneren Ventilators 64 angetrieben wird. Der innere Kühlkreislauf 62 umfasst ferner den Rückströmkanal 20, der vorliegend durch mehrere in den Ecken des rechteckigen Querschnitts des Blechpakets 12 angeordnete Kanäle gebildet ist.

FIG 5 zeigt ferner, dass sowohl der innere Ventilator 64 als auch der äußere Ventilator 66 mittels der Welle 60 angetrieben werden. Zu diesem Zweck sind die entsprechenden Lüfterräder auf die Welle 60 aufgeflanscht. Die Blechabdeckung 54 sorgt somit dafür, dass die Kühlluft vom äußeren Ventilator 66 durch die Zwischenräume zwischen den Kühlrippen 40 hindurchgeführt wird, ohne dass sie seitlich entweichen kann. Dadurch wird eine gute Kühlwirkung erreicht. Der innere und der äußere Ventilator 64, 66 sind benachbart zueinander an einem axialen Ende der rotierenden elektrischen Maschine 34 angeordnet.

In FIG 6 ist ein in Umfangsrichtung gedrehter Ausschnitt gegenüber FIG 5 dargestellt, bei dem erkennbar ist, dass der innere Kühlkreislauf 62 vom Kanal 74 hermetisch getrennt ist. Zu diesem Zweck ist eine Trennwand 68 vorgesehen, die die entsprechende Trennung bereitstellt.

FIG 7 zeigt in perspektivischer Ansicht die rotierende elektrische Maschine 34 gemäß FIG 4 im zusammenmontierten Zustand.

In der vorliegenden Ausgestaltung ist ferner vorgesehen, dass das Blechpaket 12 durch die an den stirnseitigen Enden 14 vorgesehenen Druckringe 18 axial gepresst wird. Die Druckringe 18 sind als Druckplatten ausgebildet und über Zugstangen miteinander verbunden, die über den Umfang des Blechpakets 12 verteilt angeordnet und mit dem Blechpaket 12 sowie den Druckringen 18 unter Druck verschweißt sind. Dadurch wird das Blechpaket 12 stabilisiert. Jede der Druckplatten 18 besitzt eine Mehrzahl von Gewindebohrungen, um die Verschraubungen 22 ausbilden zu können. Ferner umfasst jede der Druckplatten 18 eine Zentrierung für die Drehmomentstützen 16. Diese Anordnung ermöglicht es, das Drehmoment, das auf den Ständer 10 im bestimmungsgemäßen Betrieb einwirkt, über Flächenpressung zwischen den Druckringen 18 und den Drehmomentstützen 16 zu übertragen. Die Flächenpressung entsteht durch die Verschraubungen 22 in axialer Richtung. Die Anzahl der Verschraubungen 22 ist derart gewählt, dass die Flächenpressung ausreicht, im ungünstigsten Lastfall auch das Kurzschlussmoment der rotierenden elektrischen Maschine 34 übertragen zu können. Die Anordnung von Druckring 18 mit Drehmomentstütze 16 ist an beiden stirnseitigen Enden 14 des Blechpakets 12 identisch ausgeführt.

Das Gehäuse 36 ist als Blechgehäuse ausgebildet und dient lediglich dem Schutz der rotierenden elektrischen Maschine 34. Das Gehäuse 36 ist somit nicht mit dem Ständer 10 mechanisch verbunden, und kann deshalb auch keine Schwingungen des Ständers 10 aufnehmen. Dadurch kann eine geringe Schallaussendung erreicht werden.

Das vorgenannte Ausführungsbeispiel dient lediglich der Erläuterung der Erfindung und ist für diese nicht beschränkend. Insbesondere können natürlich Merkmale und Ausführungsbeispiele in beliebiger Weise miteinander kombiniert werden, um zu weiteren bedarfsgerechten Ausgestaltungen zu gelangen, ohne den Gedanken der Erfindung zu verlassen.

## Patentansprüche

1. Ständer (10) für eine rotierende elektrische Maschine (34), mit einem Blechpaket (12), wobei das Blechpaket (12) über seine, vorzugsweise gesamte, axiale Erstreckung zumindest teilumfänglich radial nach außen ragende, sich axial erstreckende Kühlrippen (40) aufweist, die einstückig mit dem Blechpaket (12) ausgebildet sind, zu welchem Zweck jeweils einer von zwei Druckringen (18) mit jeweils einem der gegenüberliegenden stirnseitigen Enden (14) des Blechpakets (12) verbunden ist, wobei an jedem der Druckringe (18) jeweils eine von zwei Drehmomentstützen (16) befestigt ist, so dass das Blechpaket (12) mit den Druckringen (18) mittels der Drehmomentstützen (16) direkt gestützt ist und auf den Ständer (10) einwirkende Kräfte und Momente über die Drehmomentstützen (16) vollständig ableitbar sind.

2. Ständer nach Anspruch 1,
**dadurch gekennzeichnet, dass** das Blechpaket (12) mittels der Druckringe (18) druckbeaufschlagt ist, zu welchem Zweck die Druckringe (18) mittels Zugstangen gegeneinander vorgespannt sind.

3. Ständer nach Anspruch 1 oder 2,
**dadurch gekennzeichnet, dass** zwischen den Kühlrippen (40) wenigstens ein von einem Kühlfluid durchströmbares Kühlrohr angeordnet ist.

4. Rotierende elektrische Maschine (34) mit einem ein Blechpaket (12) aufweisenden Ständer (10) und einem in einer Öffnung (72) des Ständers (10) drehbar gelagert angeordneten Läufer (32),
**dadurch gekennzeichnet, dass** der Ständer (10) nach einem der vorhergehenden Ansprüche ausgebildet ist.

5. Rotierende elektrische Maschine nach Anspruch 4,
**gekennzeichnet durch** ein vom Blechpaket (12) des Ständers (10) beabstandetes Gehäuse (36).

6. Rotierende elektrische Maschine nach Anspruch 5,
**dadurch gekennzeichnet, dass** das Gehäuse (36) eine Fluidleitvorrichtung (74) aufweist.

7. Rotierende elektrische Maschine nach Anspruch 6,
**dadurch gekennzeichnet, dass** die Fluidleitvorrichtung (74) mit den Kühlrippen (40), vorzugsweise geschlossene, Fluidkanäle ausbildet.

8. Rotierende elektrische Maschine nach einem der Ansprüche 5 bis 7, **dadurch gekennzeichnet, dass** zwischen dem Blechpaket (12) und dem Gehäuse (36) ein schalldämmendes Material angeordnet ist.

9. Rotierende elektrische Maschine nach einem der Ansprüche 4 bis 8, **gekennzeichnet durch** einen mit einer Stütztraverse (24) einer Drehmomentstütze (16) verbindbaren Grundrahmen (26).

10. Rotierende elektrische Maschine nach einem der Ansprüche 4 bis 9, **gekennzeichnet durch** einen inneren, vorzugsweise hermetisch geschlossenen, Kühlkreislauf (62).
